# EUROPÄISCHE PATENTANMELDUNG

(11) **EP 3 185 514 A2**
(43) Veröffentlichungstag der Anmeldung: **28.06.2017**
(21) Anmeldenummer: 16203613.1
(22) Anmeldetag: 13.12.2016
(51) Int. Cl.: H04L 29/08, H04W 4/04, H04W 4/20

(54) **KOMMUNIKATION ZWISCHEN VERKEHRSTEILNEHMERN**

(30) Priorität: 23.12.2015 DE 102015226723
(71) Anmelder: Continental Automotive GmbH, 30165 Hannover (DE)
(72) Erfinder: König, Axel, 63579 Freigericht (DE); Bach, Boris, 63762 Großostheim (DE); Müller, Gerhard, 64665 Alsbach (DE); Kabatek, Ulrich, 64832 Babenhausen (DE); König, Azora, 64285 Darmstadt (DE)

(57) **Zusammenfassung**

Die Erfindung betrifft ein Verfahren zur Kommunikation zwischen in einem ersten Fahrzeug und in mindestens einem weiteren Fahrzeug jeweils befindlichen Kommunikationsvorrichtungen, wobei mittels der Kommunikationsvorrichtungen eine Kommunikationsverbindung zwischen in den Fahrzeugen befindlichen Verkehrsteilnehmern herstellbar ist, wobei die Kommunikationsvorrichtungen jeweils eine Kommunikationsbereitschaft der in den Fahrzeugen befindlichen Verkehrsteilnehmer an die in den anderen Fahrzeugen befindlichen Kommunikationsvorrichtungen aussenden, in den Fahrzeugen Informationsausgaben vorhanden sind, die die Fahrzeuge angeben, deren Kommunikationsvorrichtung eine Kommunikationsbereitschaft eines Verkehrsteilnehmers aussendet.

## Beschreibung

Die Erfindung betrifft ein Verfahren und eine Vorrichtung zur Kommunikation zwischen Verkehrsteilnehmern. Aus dem Stand der Technik ist es bekannt, dass Verkehrsteilnehmer, die sich in verschiedenen Fahrzeugen befinden, mittels Hand-oder LichtZeichen miteinander kommunizieren, um sich beispielsweise dadurch zu bedanken oder zu warnen. In einigen asiatischen Ländern ist es bekannt, in Fahrzeugen Leuchtschriften anzuordnen und mittels dieser Leuchtschriften Informationen zwischen den Fahrzeugen auszutauschen. Derartige Leuchtschriften sind beispielsweise nach den deutschen Straßenverkehrsvorschriften nicht zulässig. Weiterhin ist es bekannt, zwischen Fahrzeugen mittels Mobiltelefonen zu kommunizieren. Hierzu ist es aber erforderlich, dass zumindest einer der Verkehrsteilnehmer die Mobiltelefonnummer des Verkehrsteilnehmers kennt, mit dem er in der Umgebung kommunizieren möchte. Hierzu geben beispielsweise einzelne Kraftfahrer ihre Mobiltelefonnummer dadurch bekannt, dass sie diese auf ihrem Kraftfahrzeug weithin sichtbar anbringen. Nachteilig hierbei ist zum einen, dass zur Aufnahme einer Kommunikation eine umfangreiche Mobiltelefonnummer in das Mobiltelefon eingegeben werden muss und somit ein Verkehrsteilnehmer unnötig lange abgelenkt wird und in dieser Zeit dem Verkehrsgeschehen nur unzureichend folgen kann. Außerdem möchten viele Mobiltelefon Teilnehmer ihre Telefonnummer nicht der gesamten Öffentlichkeit preisgeben, um zu verhindern, dass sie unerwünschte Anrufe auf ihrem Mobiltelefon erhalten. Weiterhin ist es bei der sogenannten Car2Car (im englischen Sprachbereich vehicle2vehicle=v2v) Kommunikation bekannt, in einzelnen Fahrzeugen vorliegende Informationen automatisiert an andere Fahrzeuge in der Umgebung der Fahrzeuge zu übertragen und gegebenenfalls diese für die Insassen dieser anderen Fahrzeuge auch darzustellen. Genauere Informationen sind hier zu auf der Webpage: https://www.car-2-car.org zu erhalten. Eine Möglichkeit zur Übertragung persönlicher Nachrichten zwischen in verschiedenen Fahrzeugen befindlichen Verkehrsteilnehmern ist nicht vorgesehen.

Aufgabe der vorliegenden Erfindung ist es daher, ein Verfahren und eine Vorrichtung zur Kommunikation zwischen in den Fahrzeugen befindlichen Kommunikationsvorrichtungen anzugeben, wobei mittels der Kommunikationsvorrichtungen eine Kommunikationsverbindung zwischen den in den Fahrzeugen befindlichen Verkehrsteilnehmern hergestellt werden kann, damit die Verkehrsteilnehmer auf einfache Art und Weise Informationen austauschen können.

Diese Aufgabe wird durch ein Verfahren mit den Merkmalen des Patentanspruchs 1 und eine Vorrichtung mit den Merkmalen des Patentanspruchs 19 gelöst. Vorteilhafte Ausgestaltungen des erfindungsgemäßen Verfahrens und der erfindungsgemäßen Vorrichtung sind den Unteransprüchen zu entnehmen.

Dadurch, dass sich in einem ersten Fahrzeug und mindestens einem weiteren Fahrzeug jeweils eine Kommunikationsvorrichtung befindet wobei mittels der Kommunikationsvorrichtungen eine Kommunikationsverbindung zwischen in den Fahrzeugen befindlichen Verkehrsteilnehmer herstellbar ist und die Kommunikationsvorrichtungen eine Kommunikationsbereitschaft des in dem jeweiligen Fahrzeug befindlichen Verkehrsteilnehmers an die anderen Kommunikationsvorrichtungen aussenden und dass in den Fahrzeugen Informationsausgaben vorhanden sind, die die Fahrzeuge angeben, deren Kommunikationsvorrichtung eine Kommunikationsbereitschaft des Verkehrsteilnehmers aussenden, kann eine Kommunikationsverbindung zwischen den Kommunikationsvorrichtungen in den Fahrzeugen hergestellt, deren Verkehrsteilnehmer eine Kommunikationsbereitschaft geäußert haben. So kann ein Verkehrsteilnehmer auf einfache Art auswählen, mit welchem der angegeben Fahrzeuge er eine Kommunikationsverbindung aufnehmen möchte. Zu dem Terminus erstes Fahrzeug ist noch hinzuzufügen, dass jedes Fahrzeug, welches Kommunikationsbereitschaften von anderen Fahrzeugen empfängt als erstes Fahrzeug anzusehen ist. So kann von jedem Fahrzeug, welches eine Kommunikationsbereitschaft aussendet, ein Verkehrsteilnehmer innerhalb dieses Fahrzeuges eine Kommunikationsverbindung mit den anderen Fahrzeugen herstellen, deren Kommunikationsvorrichtung eine Kommunikationsbereitschaft aussendet. Die Verbindungen zwischen den Fahrzeugen sind vorteilhafterweise direkt ohne Zwischenschaltung von immobilen Stationen realisiert. Diese Kommunikationsverbindung kann eine Kommunikation beispielsweise in Form von Sprache oder Schrift oder eine Kombination von Sprache und Schrift bereitstellen. So müssen zum einen keine Mobiltelefonnummern ausgetauscht werden, und es werden auch nur die Verkehrsteilnehmer mit Kommunikationsverbindungen versorgt, die dies auch möchten. Die Angabe des Fahrzeugs über die Informationsausgaben kann akustisch und/oder optisch erfolgen.

Sobald sich ein Verkehrsteilnehmer durch die Kommunikationsverbindungen mit anderen Verkehrsteilnehmern gestört fühlt, kann er die Kommunikationsverbindung beispielsweise sofort unterbinden, indem er seine Kommunikationsvorrichtung keine Kommunikationsbereitschaft mehr aussenden lässt. Dies kann beispielsweise dadurch geschehen, dass er die Kommunikationsvorrichtung vollständig ausschaltet oder aber bei der Kommunikationsvorrichtung oder einem anderen der Kommunikationsvorrichtung verbundenen Eingabegerät eine Beendigung der Kommunikationsbereitschaft für alle oder einzelne Verkehrsteilnehmer eingibt.

Bei neu hinzukommenden Fahrzeugen wird beispielsweise automatisch bei einer geäußerten Kommunikationsbereitschaft dies den bereits vorhandenen Verkehrsteilnehmern mitgeteilt. Dies kann beispielsweise dadurch erfolgen dass die Position und/oder Entfernung des neu hinzugekommenen Fahrzeuges in den bisher vorhandenen Fahrzeugen angeben wird. So kann einfach eine Kommunikationsverbindung zwischen den Verkehrsteilnehmern aufgebaut werden. Mögliche Ausgestaltungen werden später genauer beschrieben werden.

Wenn die Position und/oder Entfernung der Fahrzeuge angegeben wird, ist für den Verkehrsteilnehmer eine leichte Zuordnung der Fahrzeuge möglich, mit denen er eine Kommunikationsverbindung aufnehmen kann.

Wenn Attribute der Fahrzeuge wie beispielsweise Form, Farbe Marke und/oder Modell des Fahrzeugs übertragen und angegeben werden, ist eine noch leichtere Zuordnung möglich, insbesondere wenn die Position und/oder Entfernung der Fahrzeuge gleichzeitig angegeben wird.

Besonders einfach lässt sich das erfindungsgemäße Kommunikationsverfahren und die erfindungsgemäße Kommunikationsvorrichtung realisieren, indem bei einer bestehenden Car2Car Verbindung die Kommunikationsbereitschaft an die Daten angehängt wird, die zwischen den Fahrzeugen, die eine Car2Car Verbindung aufweisen, austauschen und auswerten.

Weiterhin vereinfacht es die Ausführung, wenn die Kommunikationsvorrichtungen der Car2Car als Kommunikationsverbindung verwendet werden. So ist nur sehr wenig zusätzlicher Aufwand erforderlich, um eine persönliche Kommunikation zwischen den Verkehrsteilnehmern realisieren zu können.

Wenn in dem ersten Fahrzeug die Position der Fahrzeuge, deren Kommunikationsvorrichtung eine Kommunikationsbereitschaft aussenden, ausgegeben wird und diese Position der Fahrzeuge auf einer Anzeige dargestellt wird, wird die Zuordnung der Fahrzeuge, die eine Kommunikationsbereitschaft aussenden und mit denen ein Verkehrsteilnehmer innerhalb des ersten Fahrzeuges eine Kommunikationsverbindung aufnehmen kann, für den Verkehrsteilnehmer innerhalb des ersten Fahrzeuges weiter vereinfacht.

Die Auswahl der Verkehrsteilnehmer, mit denen eine Kommunikationsverbindung aufgebaut werden soll erfolgt vorzugsweise durch Eingabemittel. Diese können vielfältiger Art wie beispielsweise Schaltvorrichtungen, die durch eine Berührung oder durch eine Abgabe von Gesten betätigt werden.

Sofern die Eingabemittel einzelnen auf einer Anzeige dargestellten Fahrzeugen zugeordnet sind und mittels derer mindestens ein Fahrzeug auswählbar ist, mit dessen Kommunikationsvorrichtung anschließend eine Kommunikationsverbindung aufgenommen wird, ist eine einfache Auswahl des Verkehrsteilnehmers möglich, mit dem eine Kommunikationsverbindung aufgenommen werden soll.

Diese Auswahl wird weiter vereinfacht, wenn die Anzeige als Touchscreen ausgestaltet ist, auf dem Touchscreen Fahrzeuge dargestellt werden und durch ein Berühren des Touchscreens im Bereich des dargestellten Fahrzeugs dieses Fahrzeug zur Herstellung einer Kommunikationsverbindung ausgewählt wird.

Eine mögliche weitere Vereinfachung des Verfahrens kann dadurch realisiert werden dass die Kommunikationsvorrichtung zumindest teilweise mittels Gesten bedient wird. Hierbei muss dann nicht ein mechanisches Eingabemittel oder ein Touchscreen berührt werden. Beispielsweise können diese Gesten nicht nur durch eine Bewegung der Hände oder einzelner Finger, sondern beispielsweise auch durch eine Bewegung des Kopfes, des Mundes und/oder der Augen eines Verkehrsteilnehmers realisiert werden.

Wenn die Kommunikationsverbindung zur Übermittlung von Kurzmitteilungen in Form von beispielsweise SMS ausgestaltet ist können Nachrichten zwischen den Verkehrsteilnehmern ausgetauscht werden, ohne dass der Verkehrsteilnehmer, der eine Nachricht empfängt diese sofort zur Kenntnis nehmen muss. Wenn eine Anzahl von Kurzmitteilungen vorgegeben ist und eine Kurzmitteilung aus dieser Anzahl von Kurzmitteilungen ausgewählt wird, ist eine einfache und schnelle Generierung dieser Kurzmitteilung insbesondere in Form einer SMS möglich. Wenn die Kurzmitteilung nicht nur auf einer Anzeige dargestellt wird sondern akustisch in dem Fahrzeug ausgegeben wird, muss ein Verkehrsteilnehmer nicht auf die Anzeige schauen, um die Kurzmitteilung aufnehmen zu können.

Wenn die Kurzmitteilungen in Gruppen von Kurzmitteilungen angeordnet sind und die Gruppen auf der oder einer Anzeige dargestellt werden und zunächst in einem ersten Auswahlschritt eine der einzelnen Gruppen der Kurzmitteilungen ausgewählt wird und in einem zweiten Auswahlschritt aus den dann dargestellten Kurzmitteilungen der ausgewählten Gruppe eine Kurzmitteilung ausgewählt wird, können aus einer größeren Auswahl von Kurzmitteilungen die gewünschten Kurzmitteilungen relativ schnell und übersichtlich ausgewählt werden.

Wenn mittels mindestens einer im ersten Fahrzeug angeordneten Kamera die das erste Fahrzeug umgebenden Fahrzeuge aufgenommen werden und auf der Anzeige die Aufnahmen der Fahrzeuge angezeigt werden, deren Kommunikationsvorrichtung eine Kommunikationsbereitschaft aussendet, können zum einen die Positionen der Fahrzeuge gut angezeigt werden oder durch die der Realität entsprechende Darstellung der Fahrzeuge die Zuordnung der Fahrzeuge weiter vereinfacht werden. Die Kamera oder die Kameras können beispielsweise Teil eines sogenannten BirdView-Systems sein, bei dem die Anzeige der Fahrzeuge so erfolgt, wie sie ein Beobachter wahrnehmen würde, der sich in gewisser Höhe oberhalb der Fahrzeuge befände.

Wenn alle aufgenommenen Fahrzeuge angezeigt werden und die Fahrzeuge hervorgehoben angezeigt werden, deren Kommunikationsvorrichtung eine Kommunikationsbereitschaft aussendet, kann der Verkehrsteilnehmer auch die sonstigen im Umfeld des ersten Fahrzeuges vorhandenen Fahrzeuge wahrnehmen und so besser die momentane Verkehrssituation aufnehmen.

Sofern in den Kommunikationsvorrichtungen Sprachen auswählbar sind und bei einer Kommunikationsverbindung zwischen den Kommunikationsvorrichtungen mit unterschiedlicher Spracheinstellung die Mitteilung in die Sprache übersetzt wird, die der Spracheinstellung der empfangenden Kommunikationsvorrichtung entspricht, können Verkehrsteilnehmer miteinander kommunizieren, ohne dass sie jeweils die Sprache des anderen Verkehrsteilnehmers sprechen oder verstehen müssen.

Eine erfindungsgemäße Vorrichtung weist eine Kommunikationsvorrichtung auf, die ausgestaltet ist, die eine Kommunikationsbereitschaft des in dem ersten Fahrzeug befindlichen Verkehrsteilnehmers mit anderen Verkehrsteilnehmern auszusenden und gesendete Kommunikationsbereitschaften von Fahrzeugen, die mit einer Kommunikationsvorrichtung ausgestattet sind, zu empfangen. Die erfindungsgemäße Vorrichtung weist weiterhin eine Informationsausgabe auf, mittels der die Fahrzeuge angebbar sind, deren Kommunikationsvorrichtung eine Kommunikationsbereitschaft eines Verkehrsteilnehmers aussenden. Diese Informationsausgabe kann optisch und/oder akustisch erfolgen. Beispielsweise können Attribute der Fahrzeuge angegeben werden und/oder deren Position, Richtung und/oder Entfernung zu dem Fahrzeug. Je mehr Informationen über die Fahrzeuge kundgetan werden, umso zweifelsfreier und einfacher ist eine Zuordnung der Fahrzeuge für einen Verkehrsteilnehmer möglich.

Wenn die erfindungsgemäße Vorrichtung eine Anzeige aufweist, kann die Position der Fahrzeuge auch im Verhältnis zu dem ersten Fahrzeug dargestellt werden, so dass eine schnelle Zuordnung gegeben ist.

Wenn die Anzeige als Head-up Display ausgestattet ist kann ein Verkehrsteilnehmer diese Anzeige wahrnehmen, ohne seinen Blick von der vor ihm befindlichen Straße nehmen zu müssen. Weiterhin ist es möglich, die Fahrzeuge, die sich vor dem ersten Fahrzeug befinden, durch eine entsprechende Markierung durch das Head-up Display zweifelsfrei zu kennzeichnen. Diese Darstellung bezeichnet man als Kontaktanalog oder Augmented-Reality. Bei dieser speziellen Darstellungsweise können aber nur die vor dem Fahrzeug befindlichen Fahrzeuge dargestellt werden. Es ist aber mittels des Head-up Displays auch möglich, auf eine Kontaktanaloge Darstellung zu verzichten und eine Darstellungsweise beispielsweise in Form einer zuvor beschriebenen Bird-View Darstellung zu benutzen.

Wenn die erfindungsgemäße Vorrichtung eine Vorrichtung zur Erkennung von Gesten aufweist können die Eingaben einfach erfolgen, insbesondere wenn die Anzeige als Headup-Display ausgestaltet ist. Dann muss nicht die Windschutzscheibe berührt werden, um entsprechend auf dem Headup-Display dargestellte Verkehrsteilnehmer, Gruppen von Kurzmitteilungen oder Kurzmitteilungen auszuwählen, sondern es genügt eine bestimmte Bewegung in Richtung des auszuwählenden Verkehrsteilnehmers, der auszuwählenden Gruppe von Kurzmitteilungen oder der auszuwählenden Kurzmitteilung.

Wenn die Anzeige als Touchscreen ausgestaltet ist, ist ebenfalls eine einfache Zuordnung von beispielsweise auszuwählendem Verkehrsteilnehmer oder auszuwählender Kurzmitteilung möglich.

Wenn auf der Anzeige eine Anzahl von Kurzmitteilungen darstellbar ist, die mittels Eingabemitteln auswählbar sind, können Kurzmitteilungen erstellt werden, ohne dass hierzu ein großer Aufwand nötig wäre. Ein Verkehrsteilnehmer wird hierbei insbesondere dann kaum abgelenkt, wenn die Anzeige als Headup-Display ausgestaltet ist und die Eingabemittel beispielsweise durch eine Auswertung von Gesten realisiert sind.

Durch eine Vorrichtung zur Aufnahme der Umgebung des ersten Fahrzeuges können aufgenommene Fahrzeuge auf der Anzeige dargestellt werden und sind so leicht identifizierbar. Diese Vorrichtung kann beispielsweise auch zur Generierung anderer Funktionen wie beispielsweise einem Spurhalteassistent einem Notbremsassistent dienen.

Wenn alle aufgenommenen Fahrzeuge auf der Anzeige dargestellt werden und die Fahrzeuge, deren Kommunikationsvorrichtung eine Kommunikationsbereitschaft aussendet, hervorgehoben dargestellt werden, kann mithilfe dieser einen Anzeige sowohl über die allgemeine Verkehrssituation um das Fahrzeug als auch über die Fahrzeuge informiert werden, die eine Kommunikationsbereitschaft aussenden.

Wenn die erfindungsgemäße Vorrichtung ausgestattet ist zu Kommunikation die Beleuchtungsanlage anzusteuern, kann eine Information an alle Verkehrsteilnehmer übermittelt werden.

Die Erfindung wird nachfolgend anhand der Figuren näher erläutert. Es zeigen:
- Figur 1: eine Darstellung zweier Fahrzeuge mit jeweils einem Ausführungsbeispiel einer erfindungsgemäßen Vorrichtung,
- Figur2: eine Aufsicht auf ein Ausführungsbeispiel eine Anzeige einer erfindungsgemäßen Vorrichtung mit einer ersten Darstellung,
- Figur 3: die Aufsicht auf die Anzeige aus Figur 2 mit einer zweiten Darstellung,
- Figur 4: die Anzeige aus den Figuren 2 und 3 mit einer dritten Darstellung,
- Figur 5: die Anzeige aus den Figuren Tipp 2 - 4 mit einer vierten Darstellung,
- Figur 6: ein Fahrzeug mit einem Ausführungsbeispiel einer erfindungsgemäßen Vorrichtung und einen Verkehrsteilnehmer.

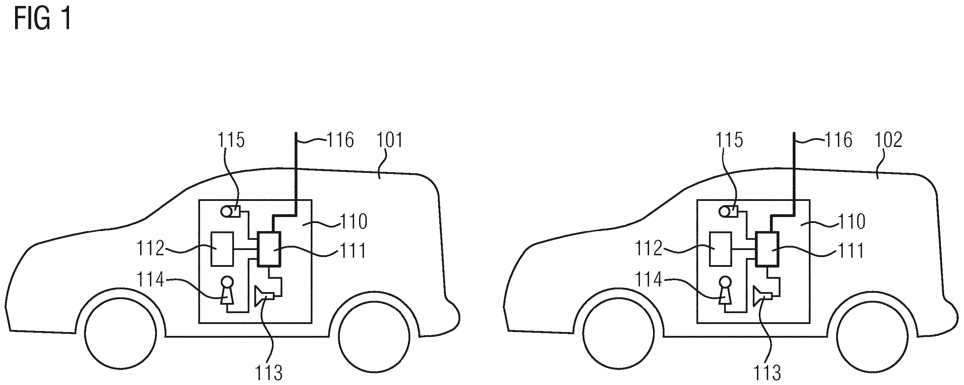

In Figur 1 erkennt man zwei Fahrzeuge 101, 102 mit jeweils einer Kommunikationsvorrichtung 110, die jeweils ein Steuergerät 111, eine Anzeige 112, einen Lautsprecher 113 ein Mikrofon 114, eine Kamera 115 und eine Antenne 116 aufweisen. Wenn jeweils in die Kommunikationsvorrichtungen 110 eine Kommunikationsbereitschaft eingegeben ist, sendet das Steuergerät 111 diese Kommunikationsbereitschaft 116 aus und empfängt über die Antenne die ausgesendete Kommunikationsbereitschaft anderer Steuergeräte, im Beispielfall kommunizieren die Steuergeräte 111 der Fahrzeuge 101, 102 über die Antennen 116 miteinander. Die Kommunikationsbereitschaft kann beispielsweise eine Grundeinstellung des Steuergerätes 110 sein, wenn die Zündung eingeschaltet ist. Es ist aber auch möglich dass ein in den Fahrzeugen 101, 102 befindlicher Verkehrsteilnehmer die Kommunikationsbereitschaft über ein Bedienelement eingibt. Dieses Bedienelement kann beispielsweise als herkömmlicher Schalter ausgestaltet sein, es kann aber auch als Spracherkennung über das Mikrofon 114 oder als Gestenerkennung über die Kamera 115 ausgestaltet sein. Auf der Anzeige 112 sind jeweils Informationen darstellbar, beispielsweise über die in der Nähe des jeweiligen Fahrzeugs 101, 102, befindlichen Fahrzeuge, deren Kommunikationsvorrichtung eine Kommunikationsbereitschaft aussendet. Es ist aber auch möglich diese Information über den Lautsprecher 113 auszugeben. Weiterhin können auf den Anzeigen 112 jeweils Informationen über auswählbare Kurzmitteilungen dargestellt werden. Wenn die Anzeigen 112 als Touchscreen ausgestaltet sind können beispielsweise dargestellte Fahrzeuge oder Kurzmitteilungen durch Berühren der Anzeige 112 im Bereich des dargestellten Fahrzeugs oder der dargestellten Kurzmitteilung ausgewählt werden. Es ist aber auch möglich, Fahrzeuge oder Kurzmitteilungen über eine Spracherkennung mittels des Mikrofons 113 auszuwählen.

Wenn beispielsweise in Fahrzeug 101 angegeben wird, dass das Fahrzeug 102 eine Kommunikationsbereitschaft aussendet, kann in Fahrzeug 101 das Fahrzeug 102 ausgewählt werden und daran anschließend eine Kurzmitteilung ausgewählt werden. So kann dann eine Kommunikationsverbindung dadurch realisiert werden dass die ausgewählte Kurzmitteilung von Fahrzeug 101 Fahrzeug 102 gesendet wird und in Fahrzeug 102 diese Kurzmitteilung beispielsweise über die Anzeige 112 oder den Lautsprecher 113 ausgegeben werden Es ist auch eine Kombination von akustischen und optischen Mitteln möglich. So kann beispielsweise zunächst ein typisches akustisches Signal für den Empfang einer Kurzmitteilung über den Lautsprecher 113 ausgegeben werden, sodass ein Verkehrsteilnehmer erkennt, dass eine Kurzmitteilung eingegangen ist und diese über den Bildschirm 112 wahrnehmen kann. Es ist aber auch möglich, dass beispielsweise nach dem akustischen Hinweis auf Eingang einer Kurzmitteilung der Verkehrsteilnehmer über das Mikrofon 114 einen Sprachbefehl in die Kommunikationsvorrichtung 110 eingeben kann so dass beispielsweise die Kurzmitteilung dann über den Lautsprecher 113 ausgegeben werden kann. Es ist auch möglich, dass bei einer aufgebauten Kommunikationsverbindung von Fahrzeug 101 zu Fahrzeug 102 (oder umgekehrt) ein Verkehrsteilnehmer in Fahrzeug 101 in das Mikrofon 114 eine gesprochene Nachricht eingeben kann, die in Fahrzeug 102 mit den Lautsprecher 113 und/oder die Anzeige 112 ausgegeben wird. Weiterhin ist es möglich, die Kommunikationsverbindung so auszugestalten, dass der Empfänger einer Nachricht auf diese direkt antworten kann, so dass beispielsweise eine schriftliche oder akustische Konversation zwischen den Verkehrsteilnehmern in den verschiedenen Fahrzeugen geführt werden kann.

Die Kommunikationsvorrichtung 110 muss nicht sämtliche vorgenannten Bauteile aufweisen, sie kann auch einfacher ausgestaltet sein. So können gegebenenfalls als Ein- und Ausgabegeräte entweder nur die Anzeige 112 vorhanden sein zu, sofern diese als Touchscreen ausgestaltet ist. Ein- und Ausgabegerät kann beispielsweise auch die Kamera 115 mit dem Lautsprecher 113 oder das Mikrofon 114 mit dem Lautsprecher 113 sein. Als Eingabegeräte können auch mechanische Schalter und/oder eine Gestenerkennung vorhanden sein.

Wenn in die Kommunikationsvorrichtungen 110 unterschiedliche Spracheinstellungen eingegeben sind, können die von beispielsweise Fahrzeug 101 in einer ersten Sprache gesendeten Nachrichten in die Sprache übersetzt werden, auf die die Kommunikationsvorrichtung 110 in Fahrzeug 102 eingestellt ist. Dies erfolgt vorteilhafter Weise in der Kommunikationsvorrichtung 110 des Fahrzeugs 102. Wenn in der ausgesendeten Kommunikationsbereitschaft des Fahrzeugs 102 bereits eine Information über die Spracheinstellung der Kommunikationsvorrichtung enthalten ist, kann die Nachricht bereits in der Kommunikationsvorrichtung 110 des Fahrzeugs 101 übersetzt und dann an Fahrzeug 102 übertragen werden.

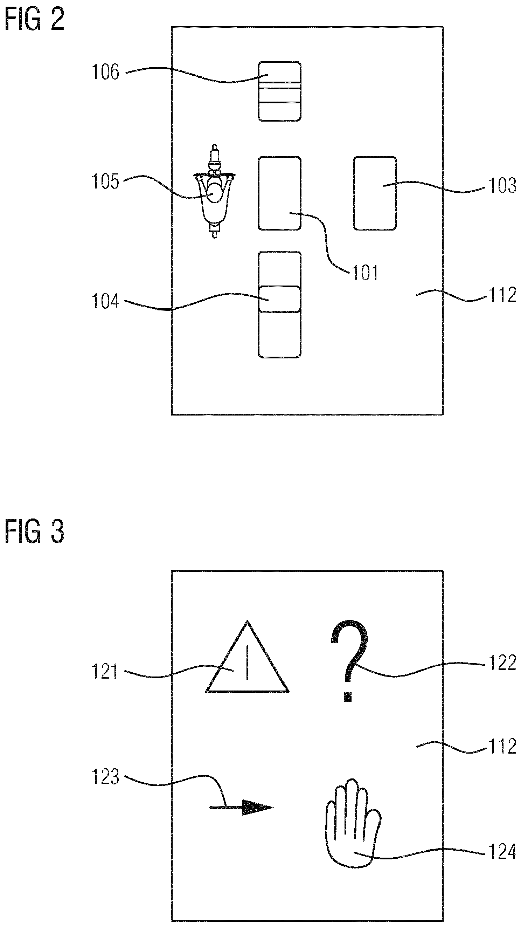

In Figur 2 erkennt man eine Aufsicht auf eine Anzeige 112 einer erfindungsgemäßen ansonsten nicht dargestellten Kommunikationsvorrichtung 110 eines Fahrzeugs 101. Auf der Anzeige 112 ist die Position des eigenen Fahrzeugs 101 in der Mitte der Anzeige 112 dargestellt. Weiterhin sind Fahrzeuge 103-106 so dargestellt, als würde ein Beobachter von oberhalb des eigenen Fahrzeugs 101 auf die Verkehrssituation mit den Fahrzeugen 101 und 103-106 blicken. Man nennt derartige Darstellungen auch BirdView- Darstellungen. Die Fahrzeuge 103-106 sind deshalb dargestellt, da ihre Kommunikationsvorrichtungen eine Kommunikationsbereitschaft aussenden und die Kommunikationsvorrichtung des Fahrzeugs 101 diese empfängt. Wenn die Anzeige 112 beispielsweise als Touchscreen ausgestaltet ist, kann ein Verkehrsteilnehmer in dem Fahrzeug 101 eines oder mehrere der Fahrzeuge 103-106, mit denen er eine Kommunikationsverbindung herstellen möchte, dadurch auswählen, dass er die Darstellungen der gewünschten Fahrzeuge 103-106 berührt. Die Auswahl kann beispielsweise auch mittels eines Sprachbefehls wie beispielsweise:" wähle 103" oder:" wähle links", um das Fahrzeug 105 oder:" wähle vorne" um das Fahrzeug 106 auszuwählen. Die Auswahl des/oder der Fahrzeuge kann auch durch eine Geste, die später noch genauer beschrieben werden wird, ausgeführt werden. Die Fahrzeuge sind piktogrammmäßig dargestellt. Das Piktogramm entspricht dem Fahrzeugtyp. Diese verschiedenartige Darstellung ist beispielsweise deshalb möglich, weil entweder mit der Kommunikationsbereitschaft der Typ und/oder die Farbe des jeweiligen Fahrzeuges mit übertragen wird. So wird beispielsweise das Fahrzeug 103 als normaler Mittelklasse-PKW, das Fahrzeug 104 als Lkw, das Fahrzeug 105 als Motorrad und das Fahrzeug 106 als Cabriolet dargestellt. Durch eine in dem Fahrzeug 101 befindliche optische Aufnahmevorrichtung, wie beispielsweise ein oder mehrere Kameras können die Fahrzeuge 103-106 erkannt und klassifiziert werden und ein ihrer Klassifizierung entsprechendes Piktogramm zur Darstellung auf der Anzeige 112 ausgewählt werden. Bei einer optischen Aufnahmevorrichtung ist es auch möglich, die Fahrzeuge so darzustellen, wie sie von der optischen Aufnahmevorrichtung aufgenommen wurden.

In Figur 3 erkennt man eine Darstellung von Gruppen von Kurzmitteilungen, die mittels Piktogrammen 121-124 dargestellt werden. So stellt beispielsweise das Piktogramm 121 eine Gruppe von Warn-Kurzmitteilungen, Piktogramm 122 eine Gruppe von Frage-Kurzmitteilungen,.Piktogramm 123 eine Gruppe von Hinweis-Kurzmitteilungen und Piktogramm 124 eine Gruppe von danke-Kurzmitteilungen dar. Sofern die Anzeige 112 als Touchscreen ausgestaltet ist kann durch ein Berühren des jeweiligen Piktogramm 121-124 die entsprechende Gruppe von Kurzmitteilungen ausgewählt werden. Akustisch ist es beispielsweise möglich die entsprechenden Piktogramme auszuwählen wie beispielsweise:" wähle oben links" für die Gruppe von Kurzmitteilungen mit dem Piktogramm 121 oder:" wähle unten rechts" für die Gruppe von Kurzmitteilungen dem Piktogramm 124.

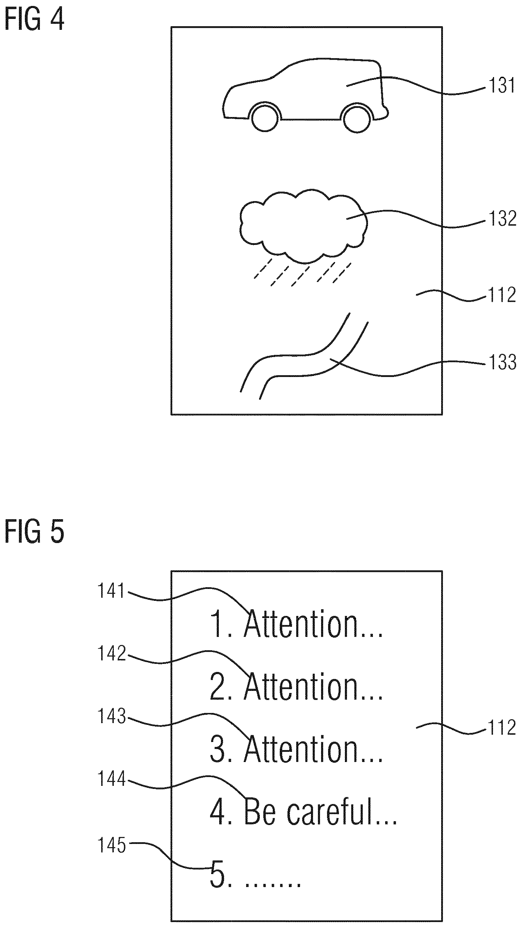

In Figur 4 ist ein Ausführungsbeispiel von möglichen Untergruppen dargestellt, die auf der Anzeige 112 angezeigt werden, wenn beispielsweise nur Kurzmitteilungen mit dem Piktogramm 121 aus Figur 3 ausgewählt werden. Das Piktogramm 131 führt zu einer Gruppe von Kurzmitteilungen die sich auf Warnungen Bezug auf ein Fahrzeug beziehen, das Piktogramm 132 auf Warnungen, die sich in Bezug auf Wetterbedingungen beziehen und Piktogramm 133 auf Warnungen, die sich auf einen Straßenzustand ziehen.

Nach Auswahl eines der Piktogramme 131 133 erscheint dann eine Liste von ausführbaren Kurzmitteilungen 141-145, wie sie in Figur 5 dargestellt werden. Durch eine Auswahl einer der Kurzmitteilungen 141-145 wird diese Kurzmitteilung entweder direkt an das zuvor gewählte Fahrzeug (beispielsweise das Fahrzeug 103 aus Figur 2) übertragen oder aber die Möglichkeit gegeben, die ausgewählte Kurzmitteilung mit selbst kreierten Informationen zu ergänzen, bevor sie über die Kommunikationsverbindung übertragen wird.

Es ist auch möglich, nach Auswahl eines entsprechenden Fahrzeuges eine Kurzmitteilung aus einer Reihe von Kurzmitteilungen auszuwählen, ohne zuvor Gruppen und/oder Untergruppen von Kurzmitteilungen darzustellen. Eine Kommunikation kann auch über gesprochene Sprache stattfinden, die dann bei der empfangenden Kommunikationsvorrichtung entweder akustisch oder auch optisch ausgegeben werden kann.

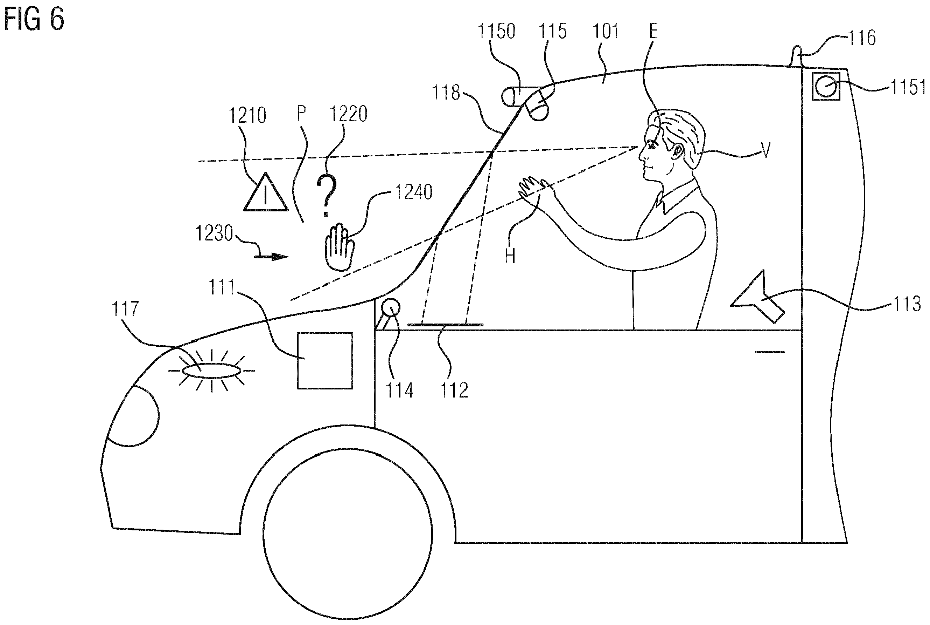

In Figur 6 erkennt man wiederum das Fahrzeug 101 in einer Teildarstellung und einen Verkehrsteilnehmer V. Das Fahrzeug 101 weist eine Kommunikationsvorrichtung auf, die ein Steuergerät 111, eine Anzeige 112 in Form eines Head-up Displays, einen Lautsprecher 113, ein Mikrofon 114, eine Kamera 115 zur Aufnahme des Verkehrsteilnehmers V, Kameras 1150, 1151, ein Blinklicht 117 und eine Windschutzscheibe 118 auf. Das Head-up-Display 112 projiziert eine Bilddarstellung gegen die Windschutzscheibe 118, so dass der Verkehrsteilnehmer V mit seinem Auge E ein virtuelles Bild P wahrnehmen kann, welches sich außerhalb des Fahrzeuges 101 zu befinden scheint. Dies geschieht dadurch, dass der Verkehrsteilnehmer V auf die Windschutzscheibe 118 blickt und so über die Spiegelwirkung der Windschutzscheibe direkt auf die Anzeige 112 blickt. Bei dem Verkehrsteilnehmer V entsteht dann der Eindruck, dass sich das auf der Anzeige an 112 dargestellte Bild als virtuelles Bild P außerhalb des Fahrzeuges zu befinden scheint.

Im Ausführungsbeispiel nach Figur 6 wird auf der Anzeige 112 die Bilddarstellung aus Figur 3 angezeigt, so dass der Verkehrsteilnehmer V die auf der Anzeige 112 in Figur 3 dargestellten (und in Figur 6 nicht dargestellten) Piktogramme 121-124 als virtuelle Piktogramme 1210, 1220, 1230 und 1240 außerhalb des Fahrzeuges 101 wahrnehmen kann. Die virtuellen Piktogramme 1210, 1220, 1230 und 1240 stellen Gruppen von Kurzmitteilungen dar, die der Verkehrsteilnehmer V auswählen kann. Dies kann beispielsweise durch eine Geste dadurch geschehen, dass der Verkehrsteilnehmer V mit seinem Mittelfinger der linken Hand H das virtuelle Piktogramm 1240 teilweise überdeckt und dies von der Kamera 115 mit einer angeschlossenen Auswerteschaltung erkannt wird. Um Fehlbedienungen zu vermeiden, kann beispielsweise eine zusätzliche Geste wie beispielsweise ein Kopfnicken oder Kopfschütteln vorgesehen sein. Es ist auch möglich die Auswahl der dargestellten virtuellen Piktogramme 1210, 1220, 1230 und 1240 durch einen Sprachbefehl über das Mikrofon 112 oder sonstige nicht dargestellte Bedienelemente auszuführen. Die Kameras 1150 und 1151 nehmen die Umgebung des Fahrzeugs 116 auf. So können die Fahrzeuge aufgenommen werden, die das Fahrzeug 101 umgeben und so deren Position, Farbe und/oder Fahrzeugtyp ermittelt werden.

Das Blinklicht 117 kann zur Ausgabe von Nachrichten entsprechend angesteuert werden, sofern die Verkehrsvorschriften des Landes, in dem sich das Fahrzeug 101 befindet, dies erlauben.

Die Erfindung ist nicht auf die zuvor beschriebenen Ausführungsbeispiele beschränkt. So kann beispielsweise die Position der beteiligten Fahrzeuge über eine Satellitenortung wie beispielsweise GPS ermittelt werden und die ermittelten Positionen zwischen den Fahrzeugen ausgetauscht werden, so dass sich ihre relative Lage zueinander bestimmen und ausgeben lässt. Weiterhin können einzelne Funktionen der Kommunikationsvorrichtung durch ein Mobiltelefon oder Smartphone, welches mit der Kommunikationsvorrichtung verbunden ist, ausgeführt werden.

Auch kann die Reihenfolge des erfindungsgemäßen Verfahrens auch so realisiert sein, dass zunächst eine zu sendende Kurzmitteilung und erst danach das Fahrzeug ausgewählt werden, an das die ausgewählte Kurzmitteilung gesendet wird.

## Patentansprüche

1. Verfahren zur Kommunikation zwischen in einem ersten Fahrzeug (101) und in mindestens einem weiteren Fahrzeug (102, 103, 104, 105, 106) jeweils befindlichen Kommunikationsvorrichtungen (110), wobei mittels der Kommunikationsvorrichtungen (110) eine Kommunikationsverbindung zwischen in den Fahrzeugen (102, 103, 104, 105, 106) befindlichen Verkehrsteilnehmern (V) herstellbar ist, **dadurch gekennzeichnet,**
**dass** die Kommunikationsvorrichtungen (110) jeweils eine Kommunikationsbereitschaft der in den Fahrzeugen (102, 103, 104, 105, 106) befindlichen Verkehrsteilnehmer (V) an die in den anderen Fahrzeugen (102, 103, 104, 105, 106) befindlichen Kommunikationsvorrichtungen (110) aussenden,
**dass** in den Fahrzeugen (102, 103, 104, 105, 106) Informationsausgaben (112, 113) vorhanden sind, die die Fahrzeuge (102, 103, 104, 105, 106) angeben, deren Kommunikationsvorrichtung (110) eine Kommunikationsbereitschaft eines Verkehrsteilnehmers (V) aussendet.

2. Verfahren nach Patentanspruch 1, **dadurch gekennzeichnet, dass** die jeweilige Entfernung
und/oder Position der Fahrzeuge (102, 103, 104, 105, 106) angegeben wird.

3. Verfahren nach Patentanspruch 1 oder 2, **dadurch gekennzeichnet, dass** Attribute der Fahrzeuge (102, 103, 104, 105, 106) übertragen und angegeben werden

4. Verfahren nach einem der vorstehenden Patentansprüche, **dadurch gekennzeichnet, dass** die Kommunikationsbereitschaft an eine Car2Car Kommunikation angehängt wird

5. Verfahren nach Patentanspruch 4, **dadurch** g e - **kennzeichnet,** dass für die Kommunikationsverbindung die Vorrichtung der Car2Car Kommunikation verwendet wird.

6. Verfahren nach einem der vorstehenden Patentansprüche, **dadurch gekennzeichnet, dass** in dem ersten Fahrzeug (101) die Position der Fahrzeuge (102, 103, 104, 105, 106), deren Kommunikationsvorrichtung (110) eine Kommunikationsbereitschaft aussenden, ausgegeben wird.

7. Verfahren nach Patentanspruch 6, **dadurch** g e - **kennzeichnet,** dass die Position der Fahrzeuge (102, 103, 104, 105, 106) auf einer Anzeige dargestellt wird.

8. Verfahren nach Patentanspruch 6 oder 7, **dadurch gekennzeichnet, dass** Eingabemittel (112, 114, 115) vorhanden sind, durch die ein Fahrzeug (102, 103, 104, 105, 106) auswählbar ist, mit dessen Verkehrsteilnehmer (V) eine Kommunikationsverbindung aufgenommen werden soll.

9. Verfahren nach Patentanspruch 7 und 8, **dadurch gekennzeichnet, dass** die Eingabemittel (112) einzelnen dargestellten Fahrzeugen (102, 103, 104, 105, 106) zugeordnet sind und mittels derer mindestens ein Fahrzeug (102, 103, 104, 105, 106) auswählbar ist, mit dessen Kommunikationsvorrichtung (110) anschließend eine Kommunikationsverbindung aufgenommen wird.

10. Verfahren nach Patentanspruch 9, **dadurch ge- kennzeichnet,** dass die Anzeige (112) als Touchscreen ausgestaltet ist und durch ein Berühren des Touchscreens im Bereich des dargestellten Fahrzeugs (102, 103, 104, 105, 106) dieses Fahrzeug (102, 103, 104, 105, 106) zur Aufnahme einer Kommunikationsverbindung auswählbar ist.

11. Verfahren nach einem der vorstehenden Patentansprüche, **dadurch gekennzeichnet, dass** die Kommunikationsvorrichtung (110) zumindest teilweise mittels Gesten bedient wird.

12. Verfahren nach einem der vorstehenden Patentansprüche, **dadurch gekennzeichnet, dass** beim Aussenden der Kommunikationsbereitschaft Attribute des Kraftfahrzeugs(102, 103, 104, 105, 106), aus dem die Kommunikationsbereitschaft ausgesandt wird, mit übertragen werden.

13. Verfahren nach einem der vorstehenden Patentansprüche, **dadurch gekennzeichnet, dass** die Kommunikationsverbindung zur Übermittlung von Kurzmitteilungen (141, 142, 143, 144, 145) ausgestaltet ist

14. Verfahren nach Patentanspruch 13, **dadurch gekennzeichnet, dass** die Kurzmitteilung aus einer Anzahl von Kurzmitteilungen (141, 142, 143, 144, 145) ausgewählt wird.

15. Verfahren nach Patentanspruch 14, **dadurch ge**- **kennzeichnet,** dass die Kurzmitteilungen in Gruppen (121, 122, 123, 124, 131, 132, 133) von Kurzmitteilungen (141, 142, 143, 144, 145) angeordnet sind und die Gruppen (121, 122, 123, 124, 131, 132, 133) auf der oder einer Anzeige (112) dargestellt werden und zunächst in einem ersten Auswahlschritt eine der einzelnen Gruppen (121, 122, 123, 124) der Kurzmitteilungen (141, 142, 143, 144, 145) ausgewählt wird und in einem zweiten Auswahlschritt aus den Kurzmitteilungen (141, 142, 143, 144, 145) der ausgewählten Gruppe eine Kurzmitteilung (141, 142, 143, 144, 145) ausgewählt wird.

16. Verfahren nach einem der vorstehenden Patentansprüche 7 bis 15, **dadurch gekennzeichnet, dass** mittels mindestens einer im ersten Fahrzeug (101) angeordneten Kamera (115) die das erste Fahrzeug (101) umgebenden Fahrzeuge (102, 103, 104, 105, 106) aufgenommen werden und auf der Anzeige (112) die Aufnahmen der Fahrzeuge (102, 103, 104, 105, 106) angezeigt werden, deren Kommunikationsvorrichtung (110) eine Kommunikationsbereitschaft aussendet.

17. Verfahren nach Patentanspruch 16, **dadurch gekennzeichnet, dass** auf der Anzeige (112) die Aufnahmen aller aufgenommenen Fahrzeuge (102, 103, 104, 105, 106) gezeigt werden und die Fahrzeuge (102, 103, 104, 105, 106) hervorgehoben angezeigt werden, deren Kommunikationsvorrichtung (110) eine Kommunikationsbereitschaft aussendet.

18. Verfahren nach einem der vorstehenden Patentansprüche,
**dadurch gekennzeichnet, dass** in den Kommunikationsvorrichtungen (110) Sprachen auswählbar sind und bei einer Kommunikation zwischen Kommunikationsvorrichtungen (110) mit unterschiedlicher Spracheinstellung die Kommunikation in die Sprache der empfangenden Kommunikationsvorrichtung (110) übersetzt wird.

19. Vorrichtung zur Ausführung eines Verfahrens nach einem der vorstehenden Patentansprüche, **dadurch** g e - **kennzeichnet,**
dass die Kommunikationsvorrichtung (110) des ersten Fahrzeugs (101) ausgestaltet ist, eine Kommunikationsbereitschaft des in dem ersten Fahrzeug (101) befindlichen Verkehrsteilnehmers (V) mit anderen Verkehrsteilnehmern auszusenden und gesendete Kommunikationsbereitschaften von Fahrzeugen (102, 103, 104, 105, 106), die mit einer Kommunikationsvorrichtung (110) ausgestattet sind, zu empfangen,
dass das erste Fahrzeug (101) eine Informationsausgabe (112, 113) aufweist, mittels der Fahrzeuge (102, 103, 104, 105, 106) angebbar sind, deren Kommunikationsvorrichtung (110) eine Kommunikationsbereitschaft eines Verkehrsteilnehmers (V) aussenden.

20. Vorrichtung nach Patentanspruch 19, **dadurch gekennzeichnet, dass** die Informationsausgabe (112, 113) die Entfernung und/oder die Position der Fahrzeuge (102, 103, 104, 105, 106) angibt

21. Vorrichtung nach Patentanspruch 19 oder 20, **dadurch gekennzeichnet, dass** sie eine Anzeige (112) aufweist

22. Vorrichtung nach Patentanspruch 21, **dadurch gekennzeichnet, dass** die Anzeige (112) als Head-up Display ausgestaltet ist.

23. Vorrichtung nach einem der Patentansprüche 19 bis 22, **dadurch gekennzeichnet, dass** sie eine Vorrichtung (115) zur Erkennung von Gesten aufweist.

24. Vorrichtung nach einem der Patentansprüche 21 bis 23,
**dadurch gekennzeichnet, dass** die Anzeige (112) als Touchscreen ausgestaltet ist.

25. Vorrichtung nach einem der Patentansprüche 21 bis 24,
**dadurch gekennzeichnet, dass** auf der Anzeige (112) eine Anzahl von Kurzmitteilungen (141, 142, 143, 144, 145) darstellbar ist, die mittels Eingabemitteln (112, 114, 115) auswählbar sind.

26. Vorrichtung nach einem der Patentansprüche 21 bis 25,
**dadurch gekennzeichnet, dass** sie eine Vorrichtung (1150, 1151) zur Aufnahme der Umgebung des ersten Fahrzeugs (101) aufweist und aufgenommene Fahrzeuge (101, 102, 103, 104, 105, 106), deren Kommunikationsvorrichtung (110) eine Kommunikationsbereitschaft aussendet, auf der Anzeige (112) darstellbar sind.

27. Vorrichtung nach Patentanspruch 25, **dadurch gekennzeichnet, dass** alle aufgenommenen Fahrzeuge (101, 102, 103, 104, 105, 106) auf der Anzeige (112) darstellbar sind und Fahrzeuge (101, 102, 103, 104, 105, 106), deren Kommunikationsvorrichtung (110) eine Kommunikationsbereitschaft aussendet, auf der Anzeige (112) hervorgehoben darstellbar sind.

28. Vorrichtung nach einem der Patentansprüche 19 bis 26,
**dadurch gekennzeichnet, dass** sie ausgestaltet ist, zur Kommunikation die Beleuchtungsanlage (117) anzusteuern.
